# EUROPÄISCHE PATENTSCHRIFT

(11) **EP 2 724 050 B1**
(45) Veröffentlichungstag und Bekanntmachung des Hinweises auf die Patenterteilung: **05.09.2018**
(21) Anmeldenummer: 12734783.9
(22) Anmeldetag: 30.05.2012
(51) Int. Cl.: F16F 15/14, F16F 15/12

(54) **DREHMOMENTÜBERTRAGUNGSEINRICHTUNG**
TORQUE TRANSMISSION DEVICE
DISPOSITIF DE TRANSMISSION DE COUPLE DE ROTATION

(30) Priorität: 21.06.2011 DE 102011122783
(43) Veröffentlichungstag der Anmeldung: 30.04.2014
(73) Patentinhaber: Schaeffler Technologies AG & Co. KG, 91074 Herzogenaurach (DE)
(72) Erfinder: KÜHNLE, Michael, 77815 Bühl (DE); SCHNÄDELBACH, David, 76534 Baden-Baden-Neuweier (DE)
(86) Internationale Anmeldenummer: PCT/DE2012/000565
(87) Internationale Veröffentlichungsnummer: WO 2012/175064

(56) Entgegenhaltungen:
- DE-A1-102004 004 176
- DE-A1-102004 039 905
- DE-A1-102010 022 255

## Beschreibung

Die Erfindung betrifft eine Drehmomentübertragungseinrichtung mit den Merkmalen gemäß dem Oberbegriff von Anspruch 1.

Aus der DE 10 2009 024 743 ist eine Drehmomentübertragungseinrichtung in einem Antriebsstrang eines Kraftfahrzeugs bekannt. Diese Drehmomentübertragungseinrichtung ist als hydrodynamischer Drehmomentwandler mit einer Wandlerüberbrückungskupplung, einem Torsionsschwingungsdämpfer und einem Fliehkraftpendel ausgebildet. Dieser weist ein um eine Drehachse drehbares Rotationsbauteil auf, das einteilig als Pendelmassenträger und Dämpferbauteil ausgebildet ist und im Bereich der Pendelmassen einen ersten ringscheibenförmigen Erstreckungsabschnitt und radial weiter innen einen dazu axial beabstandeten zweiten ringscheibenförmigen Erstreckungsabschnitt aufweist, wobei der erste und zweite ringscheibenförmige Erstreckungsabschnitt über ein Verbindungsabschnitt miteinander befestigt sind.

Dabei kann es unter Fliehkrafteinwirkung auf das Rotationsbauteil vorwiegend durch die an dem Rotationsbauteil angeordneten Pendelmassen zu einer Biegebelastung im Bereich des Verbindungsabschnitts kommen, der eine unerwünschte Belastung auf das Bauteil bewirkt.

In der DE 10 2004 004 176 A1 ist ein hydrodynamischer Drehmomentwandler mit einer Wandlerüberbrückungskupplung offenbart. Die DE 10 2004 039 905 A1 und die DE 10 2010 022 255 A1 zeigen jeweils ein Schwingungsdämpfungssystem.

Aufgabe der Erfindung ist es, die Biegebeanspruchung eines Rotationsbauteils zu verringern.

Erfindungsgemäß wird diese Aufgabe durch eine Drehmomentübertragungseinrichtung mit den Merkmalen gemäß Anspruch 1 gelöst.

Entsprechend wird eine Drehmomentübertragungseinrichtung in einem Antriebsstrang eines Kraftfahrzeugs mit einem um eine Drehachse drehbaren Rotationsbauteil vorgeschlagen, das einen ersten ringscheibenförmigen Erstreckungsabschnitt und einen dazu axial beabstandeten zweiten ringscheibenförmigen Erstreckungsabschnitt aufweist, wobei der erste und zweite ringscheibenförmige Erstreckungsabschnitt über einen Verbindungsabschnitt miteinander befestigt sind, wobei der Verbindungsabschnitt elastisch ausgebildet ist. Dadurch kann eine axial elastische Topfung eines Bauteils erreicht werden, womit dessen Biegebeanspruchung verringert wird.

In einer besonders vorteilhaften, speziellen Ausgestaltung der Erfindung ermöglicht der Verbindungsabschnitt eine axiale Beweglichkeit zwischen dem ersten und zweiten ringscheibenförmigen Erstreckungsabschnitt.

In einer weiteren speziellen Ausführung der Erfindung ist der Verbindungsabschnitt biegeweich ausgebildet.

In einer weiteren speziellen Ausbildung der Erfindung ist der erste und zweite ringscheibenförmige Erstreckungsabschnitt radial zueinander beabstandet.

In einer bevorzugten Ausgestaltung der Erfindung ist das Rotationsbauteil einteilig ausgebildet.

In einer weiteren bevorzugten Ausgestaltung der Erfindung ist der Verbindungsabschnitt als separates Verbindungselement ausgeführt. Vorzugsweise ist das Verbindungselement fest mit dem ersten und zweiten ringscheibenförmigen Erstreckungsabschnitt verbunden, beispielsweise vernietet, verschweißt, verstemmt, verschraubt, verklebt, verlötet oder durch eine andere schlüssige Verbindung. Insbesondere ist das Verbindungselement als Federblech und/oder als Tellerfeder und/oder als Blattfeder ausgebildet.

Erfindungsgemäß ist an dem Rotationsbauteil im Bereich des ersten ringscheibenförmigen Erstreckungsabschnitts eine Zusatzmasse angeordnet. Vorzugsweise ist die Zusatzmasse als wenigstens eine Pendelmasse eines Fliehkraftpendels ausgeführt, wobei der erste ringscheibenförmige Erstreckungsabschnitt den Pendelmassenträger bildet und wobei die Pendelmasse entlang einer Pendellaufbahn begrenzt gegenüber dem Pendelmassenträger verschwenkbar ist. Insbesondere bildet der zweite ringscheibenförmige Erstreckungsabschnitt einen Pendelflansch zur Befestigung des Fliehkraftpendels an einem drehbaren Bauteil der Drehmomentübertragungseinrichtung.

Besonders bevorzugt ist der Torsionsschwingungsdämpfer, aufweisend wenigstens zwei seriell oder parallel geschaltete Dämpferstufen, in einer nasslaufenden Kupplungseinrichtung, beispielsweise Anfahrkupplung, Einfachkupplung, Doppelkupplung angeordnet. Vorzugsweise ist an dem Dämpferzwischenteil, das bedeutet wirksam zwischen zwei Dämpferstufen ein Fliehkraftpendel angeordnet. Auch ist es denkbar, das Fliehkraftpendel zusätzlich oder alternativ am Dämpfereingangsteil und/oder am Dämpferausgangsteil mittelbar oder unmittelbar anzuordnen.

Auch kann anstatt oder zusätzlich zu dem oder den Fliehkraftpendel ein oder mehrere Massetilger, bestehend aus wenigstens einer Zusatzmasse, die die Funktion der Erhöhung eines Massenträgheitsmomentes aufweisen kann, eingebracht werden und/oder an dem Torsionsschwingungsdämpfer angeordnet werden.

In einer weiteren besonderen Ausgestaltung der Erfindung ist die Kupplungseinrichtung mit einem oder mehreren der vorstehend genannten Merkmale in einem Hybridantriebsstrang eines Kraftfahrzeugs unter Zuschaltung einer Brennkraftmaschine und einer Elektromaschine als K0 und/oder K1-Kupplung oder auch in einer anderen Wirkungsweise in dem Antriebsstrang anzuordnen.

Allgemein kann die Drehmomentübertragungseinrichtung als Kupplungseinrichtung, beispielsweise als nasslaufende oder trocken laufende Kupplungseinrichtung, die wiederum jeweils eine einfache Anfahrkupplung, Getriebekupplung oder Doppelkupplungseinrichtung sein kann und/oder als Torsionsschwingungsdämpfer und/oder als Zweimassenschwungrad ausgebildet sein und/oder an und/oder in einem hydrodynamischen Drehmomentwandler angeordnet sein.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen ausführlich beschrieben. Es zeigen im Einzelnen:
- Figur 1a:: Schematische Querschnittsdarstellung einer Drehmomentübertragungseinrichtung in einer speziellen Ausführungsform der Erfindung in einem ersten Zustand.
- Figur 1b:: Schematische Querschnittsdarstellung einer Drehmomentübertragungseinrichtung in einer speziellen Ausführungsform der Erfindung in einem zweiten Zustand.
- Figur 2:: Schematische Querschnittsdarstellung einer Drehmomentübertragungseinrichtung in einer weiteren speziellen Ausführungsform der Erfindung.
- Figur 3:: Querschnittsansicht einer Drehmomentübertragungseinrichtung in einer weiteren speziellen Ausführungsform der Erfindung.
- Figur 4:: Räumliche Ansicht eines Reiblamellenpakets der Drehmomentübertragungseinrichtung aus Figur 3.
- Figur 5:: Räumliche Querschnittsansicht eines weiteren Ausschnitts der Drehmomentübertragungseinrichtung aus Figur 3.
- Figur 6:: Räumliche Ansicht des Fliehkraftpendels der Drehmomentübertragungseinrichtung aus Figur 3.

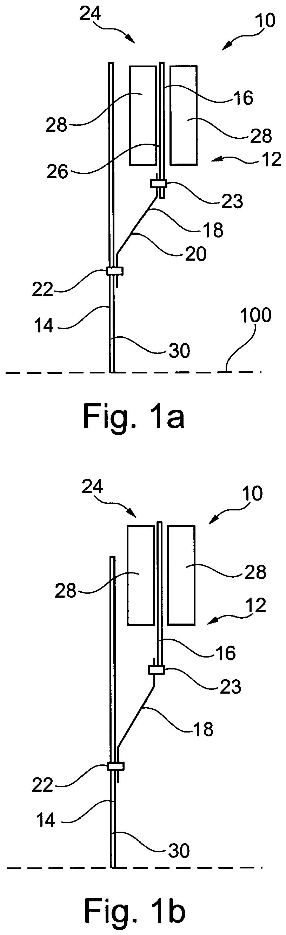

In Figur 1 ist eine schematische Querschnittsansicht einer Drehmomentübertragungseinrichtung 10 in einer speziellen Ausführungsform der Erfindung in einem ersten Zustand dargestellt. Der erste Zustand liegt beispielsweise bei dann vor, wenn sich die betreffenden Bauteile um die Drehachse nicht drehen.

Die Drehmomentübertragungseinrichtung 10 weist ein um eine Drehachse 100 drehbares Rotationsbauteil 12 auf, das einen ersten ringscheibenförmigen Erstreckungsabschnitt 14 und einen dazu axial beabstandeten zweiten ringscheibenförmigen Erstreckungsabschnitt 16 aufweist, wobei der erste und zweite ringscheibenförmige Erstreckungsabschnitt 14, 16 über einen Verbindungsabschnitt 18 miteinander befestigt sind. Der Verbindungsabschnitt 18 ist als separates Verbindungselement 20 ausgeführt, beispielsweise als Tellerfeder und mit dem ersten und zweiten ringscheibenförmige Erstreckungsabschnitt 14, 16 jeweils fest mit Hilfe eines Nietelements 22, 23 verbunden.

Der Verbindungsabschnitt 18 ist dabei axial elastisch, insbesondere biegeweich ausgebildet, so dass eine axiale Beweglichkeit zwischen dem ersten und zweiten ringscheibenförmigen Erstreckungsabschnitt 14, 16 ermöglicht wird. In einem radial äußeren Bereich des zweiten ringscheibenförmigen Erstreckungsabschnitts 14 ist ein Fliehkraftpendel 24 angeordnet, indem der zweite ringscheibenförmige Erstreckungsabschnitt 14 einen Pendelmassenträger 26 darstellt, an dem axial beidseitig an diesem entlang einer Pendellaufbahn umfangsseitig und radial begrenzt verschwenkbare Pendelmassen 28 angeordnet sind. Der erste ringscheibenförmige Erstreckungsabschnitt bildet dabei einen Pendelflansch 30 aus.

Durch die vergrößerte Masse im Bereich des zweiten ringscheibenförmigen Erstreckungsabschnitts 16 erfolgt bei einwirkender Fliehkraft auf die Bauteile eine Verbiegung des zweiten ringscheibenförmigen Erstreckungsabschnitts 16 gegenüber dem ersten ringscheibenförmigen Erstreckungsabschnitt 14 aufgrund des zwischen dem ersten und zweiten ringscheibenförmigen Erstreckungsabschnitts 14, 16 vorherrschenden Axialversatzes. Dadurch wirkt üblicherweise im Bereich des Verbindungsabschnitts 18 eine erhöhte Biegebeanspruchung.

Durch die elastische Ausführung des Verbindungsabschnitts 18 kann eine axiale Beweglichkeit zwischen dem ersten und zweiten ringscheibenförmigen Erstreckungsabschnitt 14, 16 bewirkt werden, die sich bei einwirkender Fliehkraft, wie in Figur 1b gezeigt, zum einen in einer axialen Verlagerung des zweiten ringscheibenförmigen Erstreckungsabschnitts 16 hin zu dem ersten ringscheibenförmigen Erstreckungsabschnitt 14 sowie in einer radial nach außen gerichteten Bewegung des zweiten ringscheibenförmigen Erstreckungsabschnitts 16 äußert. Dadurch kann die Biegebeanspruchung im Bereich des Verbindungsabschnitts 18 verringert werden.

Weiterhin befindet sich der zweite ringscheibenförmige Erstreckungsabschnitt 16 auch bei einwirkender Fliehkraft in einer radial ungewinkelten, das bedeutet aufrechten Stellung, womit eine zuverlässige Führung der Pendelmassen 28 an dem Pendelmassenträger 26 erreicht werden kann.

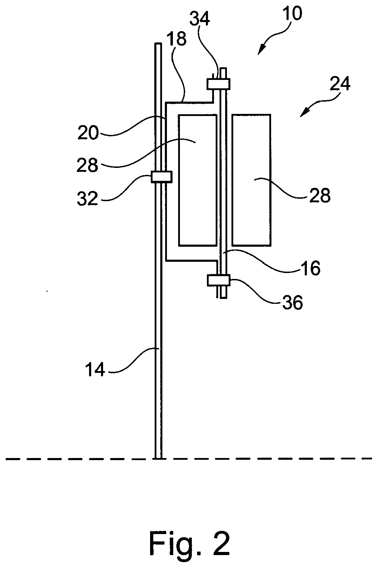

Figur 2 zeigt eine schematische Querschnittsdarstellung einer Drehmomentübertragungseinrichtung 10 in einer weiteren speziellen Ausführungsform der Erfindung. Hier ist der zweite ringscheibenförmige Erstreckungsabschnitt 16 radial auf Höhe der Verbindung 32 zwischen dem Verbindungsabschnitt 18 und dem ersten ringscheibenförmigen Erstreckungsabschnitt 14 angeordnet, wobei der Verbindungsabschnitt 18 als separates und mit dem ersten und zweiten ringscheibenförmigen Erstreckungsabschnitt 14, 16 verbundenes Verbindungselement 20 ausgebildet ist.

Die Befestigung des Verbindungsabschnitts 18 an dem zweiten ringscheibenförmigen Erstreckungsabschnitt 16 erfolgt mit Hilfe von zwei radial versetzt zueinander angeordneten Nietelementen 34, 36, zwischen denen die Pendelmassen 28 eines Fliehkraftpendels 24 aufgenommen und entlang einer Pendellaufbahn umfangsseitig und radial begrenzt gegenüber dem zweiten ringscheibenförmigen Erstreckungsabschnitt 16 verschwenkbar sind.

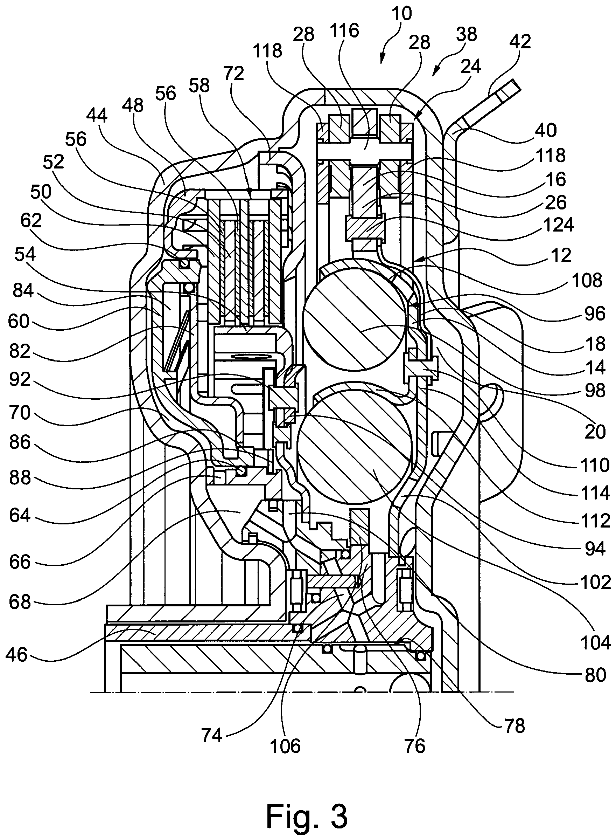

In Figur 3 ist eine Querschnittsansicht einer Drehmomentübertragungseinrichtung 10 in einer weiteren speziellen Ausführungsform der Erfindung dargestellt. Die Drehmomentübertragungseinrichtung 10 ist als Anfahrkupplung wirksame nasslaufende Kupplungseinrichtung 38 ausgebildet, die wirkungsmäßig in einem Antriebsstrang eines Kraftfahrzeugs zwischen einem Antriebselement, wie einer Brennkraftmaschine und/oder einer Elektromaschine und einer Abtriebsseite, beispielsweise einem Getriebe angeordnet ist.

Die Kupplungseinrichtung 38 ist mit Hilfe eines Anbindungselements 40 mittels Öffnungen 42 und darin durchführbarer Befestigungselemente mit einer Flexplate eines Antriebselements verbunden. Das Anbindungselement 40 ist fest mit dem Kupplungsgehäuse 44 der Kupplungseinrichtung 38 verbunden, beispielsweise vernietet oder verschweißt, wobei das Kupplungsgehäuse 44 als geschlossenes Gehäuse mit darin aufgenommenem Fluid, beispielsweise Öl ausgebildet ist. Das Kupplungsgehäuse 44 weist radial innen eine Öffnung auf, durch die ein abtriebsseitig angeordnetes Bauteil, beispielsweise eine Getriebeeingangswelle 46 durchführbar ist.

An einer dem Anbindungselement 40 axial abgewandten Seite des Kupplungsgehäuses 44 ist ein Aussenlamellenträger 48 drehfest mit einer Innenseite des Kupplungsgehäuses 44 verbunden. Der Aussenlamellenträger 48 dient der Aufnahme von radial innen liegenden Antriebsreiblamellen 50, beispielsweise über eine Verzahnung, die eine axiale Verschiebbarkeit aber dennoch eine drehwirksame Mitnahme der Antriebsreiblamellen 50 mit der Drehbewegung des Aussenlamellenträgers 48 ermöglicht.

Axial zwischen und abwechselnd mit den Antriebsreiblamellen 50 sind Abtriebsreiblamellen 52 eingebracht, die radial innen über eine Verzahnung entsprechend der Verzahnung zwischen Aussenlamellenträger 48 und Antriebsreiblamellen 50 mit einem Innenlamellenträger 54 verbunden sind. Axial beidseitig an den Antriebsreiblamellen 50 sind Reibbeläge 56 angeordnet, wodurch bei geschlossener Kupplung ein Reibschluss zwischen Antriebsreiblamellen 50 und Abtriebsreiblamellen 52 und damit eine Drehmomentübertragung zwischen Antriebselement und Abtriebsseite hergestellt werden kann. Auch ist in gewissen Betriebszuständen der Kupplungseinrichtung 38 ein Schlupf zwischen den Antriebsreiblamellen 50 und den Abtriebsreiblamellen 52 möglich.

Zur Betätigung der Kupplungseinrichtung 38, das bedeutet zum Schließen und Öffnen des Reiblamellenpakets 58 ist ein axial verschiebbarer Kolben 60 vorgesehen, der mit seinem radial äußeren Ende über die Wirkung einer Dichtung 62 an den Aussenlamellenträger 48 angrenzt und gegenüber diesem abgedichtet ist. An seinem radial inneren Ende ist der Kolben 60 mit Hilfe einer weiteren Dichtung 64 gegenüber einer Deckelnabe 66 axial bewegbar und darauf abgestützt. Die Deckelnabe 66 weist eine Durchgangsöffnung 68 auf, die eine Durchströmung mit einem Fluid ermöglicht, zur Druckeinleitung in den zwischen dem Kupplungsgehäuse 44 und dem Kolben 60 gebildeten Zwischenraum 70 und damit zur Betätigung des Kolbens 60. Die Abstützung der Betätigungskraft bei kraftbeauschlagtem Kolben 60 wird durch eine mit dem Kupplungsgehäuse 44 drehfest verbundene Endlamelle 72 bewirkt.

Die Zuleitung des Fluids zur Deckelnabe 66 erfolgt über Durchgangsöffnungen 74 in einer Abtriebsnabe 76 die über eine Verzahnung 78 drehfest mit der Getriebeeingangswelle 46 verbunden ist. Die Abtriebsnabe 76 weist eine zweite Durchgangsöffnung 80 auf, die die dem Zwischenraum 70 abgewandte Seite des Kolbens 60 mit Fluid versorgen kann und damit die Seite, auf der sich das Reiblamellenpaket 58 bestehend aus den Antriebsreiblamellen 50 und den Abtriebsreiblamellen 52 befindet. Diese Fluidversorgung durch die Durchgangsöffnung 80 dient insbesondere der Kühlung des Reiblamellenpakets 58, wozu die Reibbeläge Kühlnuten zur Durchströmung mit dem Fluid ausweisen.

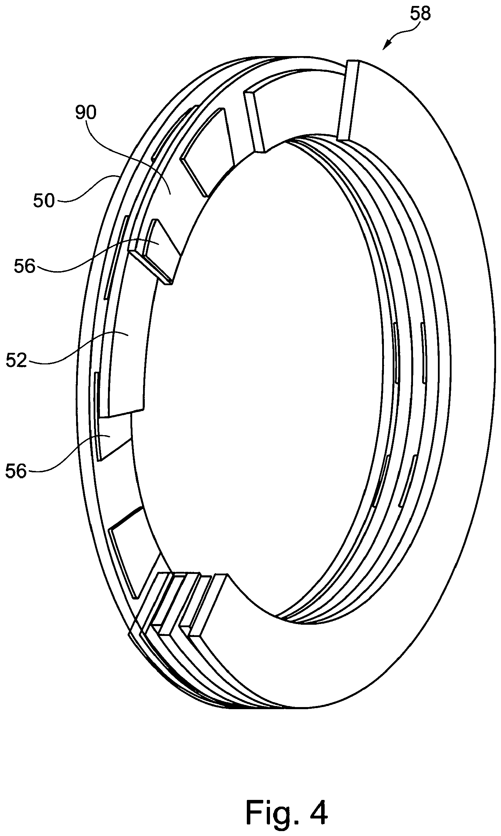

Hierzu zeigt Figur 4 das Reiblamellenpaket 58 aus Figur 3 in räumlicher Ansicht. Hierbei sind die zwischen den Reibbelägen 56 eingebrachten Kühlnuten 90 erkennbar, die eine Durchströmung des Reiblamellenpakets 58 mit einem Fluid zur Kühlung des Reiblamellenpakets 58, insbesondere im schlupfenden Betrieb der Kupplungseinrichtung 38 ermöglichen.

In Bezug auf Figur 3 dient die zweite Durchgangsöffnung 80 der Druckbeaufschlagung einer rechten Seite des Kolbens 60, wozu ein Ausgleichselement 82 derart auf der rechten Seite des Kolbens 60 eingebracht ist, so dass zwischen dem Kolben 60 und dem Ausgleichselement 82 ein nach radial aussen abgedichteter zweiter Zwischenraum 84 entsteht, dessen Fliehöldruck den Fliehöldruck in dem Zwischenraum 70 zwischen Kolben 60 und Kupplungsgehäuse 44 ausgleicht oder nahezu ausgleicht. Damit das Fluid in den zweiten Zwischenraum 84 einströmen kann, ist ein Spalt 86 zwischen dem Ausgleichselement 82 und dem Kolben 60 vorgesehen. Der Kolben 60 ist dabei drehfest mit dem Ausgleichselement 82 verbunden, wozu eine an dem Kolben 60 angeordnete Verzahnung mit einer Verzahnung an dem Ausgleichselement 82 zusammenwirkt.

Das Ausgleichselement 82 ist axial durch ein Sicherungselement 88 begrenzt, wobei das Sicherungselement 88 drehfest mit der Deckelnabe 66 verbunden ist und radial außerhalb der Deckelnabe 66 eine Axialverzahnung aufweist die mit einer komplementären Verzahnung an dem Ausgleichselement 82 zusammenwirkt und damit eine drehfeste Verbindung zwischen dem Ausgleichselement 82 und der Deckelnabe 66 ermöglicht. Damit ist auch der Kolben 60 über dessen Verzahnung mit dem Ausgleichselement 82 gegenüber der Deckelnabe 66 drehfest.

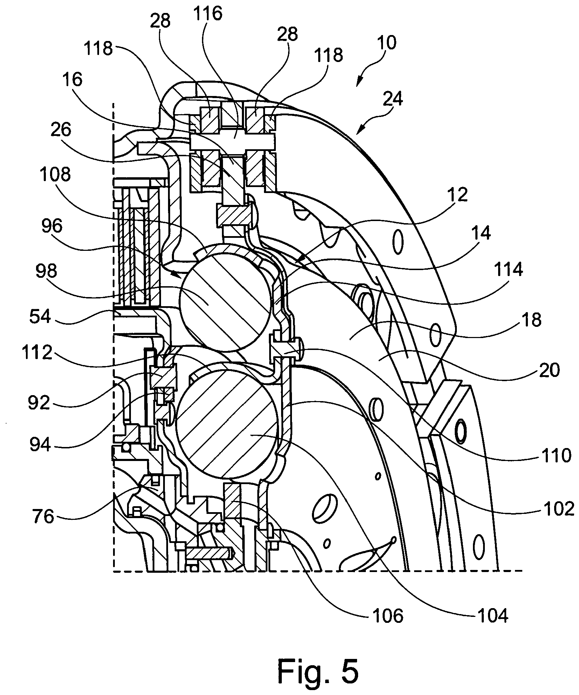

Mit Verweis auf Figur 3 und Figur 5, die eine räumliche Querschnittsansicht eines weiteren Ausschnitts der Drehmomentübertragungseinrichtung aus Figur 3 dargestellt sei näher erläutert, dass der Innenlamellenträger 54 mit Hilfe eines Nietelements 92 mit einem Dämpfereingangsteil 94 eines Torsionsschwingungsdämpfers 96 verbunden. Der Torsionsschwingungsdämpfer 96 weist radial außen angeordnete Energiespeicherelemente 98 auf, die eine drehwirksame und umfangsseitig elastische Anbindung des Dämpfereingangteils 94 mit einem Dämpferzwischenteil 102 zur Bildung einer ersten Dämpferstufe ermöglichen. Das Dämpferzwischenteil 102 ist über die Wirkung weiterer radial weiter innen angeordneter Energiespeicherelemente 104 begrenzt gegenüber einem Dämpferausgangteil 106 verdrehbar, womit eine der ersten Dämpferstufe seriell nachgeschaltete zweite Dämpferstufe gebildet wird. Das Dämpferausgangsteil 106 ist mit der Abtriebsnabe 76 drehfest verbunden.

Das Dämpferzwischenteil 102 ist zweiteilig ausgebildet, mit einem die ersten Energiespeicherelemente 98 radial begrenzenden Bereich, einem sogenannten Retainer 108, der in einen radial sich nach innen erstreckenden Abschnitt übergeht und unter anderem zur axialen Sicherung der ersten und zweiten Energiespeicherelemente 98, 104 dient. In einem radial zwischen den ersten und zweiten Energiespeicherelementen 98, 104 liegenden Bereich ist mit Hilfe eines Nietelementes 110 ein weiterer und dem Dämpferzwischenteil 102 zugeordneter Retainer 112 angebracht, der die zweiten Energiespeicherelemente 104 radial außen umgreift und diese radial sichert.

An dem Nietelement 110 ist ein Verbindungselement 18 zur elastischen Anbindung eines radial außerhalb der ersten Energiespeicherelemente 98 angeordneten Pendelmassenträgers 26 eines Fliehkraftpendels 24 fest angebracht. Der Pendelmassenträger 28 als zweiter ringscheibenförmiger Erstreckungsabschnitt 16 bildet gemeinsam mit dem Pendelflansch 114, der einteilig mit dem Dämpferzwischenteil 102 ausgebildet ist als erster ringscheibenförmiger Erstreckungsabschnitt 14 und dem Verbindungselement 18 ein Rotationsbauteil 12, dessen Verbindungsabschnitt 18, hier verwirklicht durch das separate Verbindungselement 20, elastisch und biegeweich ausgestaltet ist. Das Verbindungselement 20 ist hier als Federblech ausgebildet und ermöglicht durch seine elastischen Eigenschaften eine axiale Beweglichkeit des zweiten ringscheibenförmigen Erstreckungsabschnitts 16 gegenüber dem ersten ringscheibenförmigen Erstreckungsabschnitt 14. Das Verbindungselement 20 ist mittels des Nietelements 126 an dem Pendelmassenträger befestigt.

In einem radial äußeren Bereich des Pendelmassenträgers 26 sind axial beidseitig Pendelmassen 28 umfangsseitig und radial verschwenkbar angebracht. Zur Ermöglichung der Bewegung entlang einer Pendellaufbahn ist jeweils ein durch zwei axial beidseitig angeordnete Pendelmassen 28 gebildetes Pendelmassenpaar über Abrollelemente, beispielsweise Wälzköper oder Wälzlager gegenüber dem Pendelmassenträger 26 begrenzt bewegbar. Die beiden Pendelmassen 28 eines Pendelmassenpaars sind dabei mit Hilfe von durch Ausschnitte in dem Pendelmassenträger 26 durchgreifende Abstandselemente 116, beispielsweise Abstandsbolzen miteinander befestigt.

Zusätzlich zu den Pendelmassen 28 eines Pendelmassenpaars sind vom Pendelmassenträger 26 jeweils abgewandt, weitere Zusatzpendelmassen 118 ebenfalls mit Hilfe der Abstandbolzen 116 an den Pendelmassen 28 befestigt, zur Erhöhung der Tilgungswirkung des Fliehkraftpendels 24.

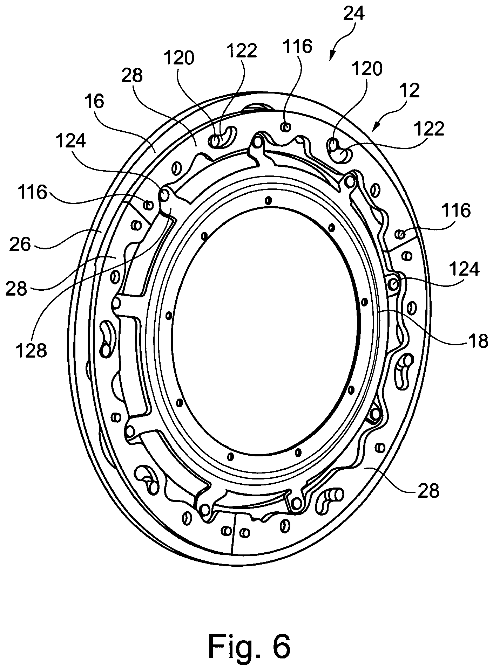

Figur 6 zeigt das Fliehkraftpendel 24 der Drehmomentübertragungseinrichtung aus Figur 3 in räumlicher Ansicht. Das Fliehkraftpendel 24 bildet hierbei das Rotationsbauteil 12, dessen zweiter ringscheibenförmiger Erstreckungsabschnitt 16 durch den Pendelmassenträger 26 und dessen erster ringscheibenförmiger Erstreckungsabschnitt durch den Pendelflansch der zugleich auch das Dämpferzwischenteil darstellt, gebildet wird. Die umfangsseitig benachbart angeordneten insgesamt drei Pendelmassenpaare sind jeweils mit Hilfe von Abrollelementen 120 gegenüber dem Pendelmassenträger 26 entlang einer Pendellaufbahn begrenzt verschwenkbar. Dazu laufen die Abrollelemente 120 in aus dem Pendelmassenträger 26 und den Pendelmassen 28 ausgenommenen Laufbahnen 122, wobei die Konturen der Laufbahnen 122 die Pendellaufbahn festlegen.

Das Verbindungselement 18 ist mittels der Nietelemente 126 an dem Pendelmassenträger 28 befestigt, wozu an dem Verbindungselement radial verlaufende Finger 128 vorgesehen sind, zur Erhöhung der elastischen Eigenschaften des Verbindungselements 18 und zur Verringerung des Massenträgheitsmoments.

## Patentansprüche

1. Drehmomentübertragungseinrichtung (10) in einem Antriebsstrang eines Kraftfahrzeugs, die als Torsionsschwingungsdämpfer (96) ausgebildet und in einem hydrodynamischen Drehmomentwandler angeordnet ist, mit einem um eine Drehachse drehbaren Rotationsbauteil (12), das einen ersten ringscheibenförmigen Erstreckungsabschnitt (16) und einen dazu axial beabstandeten zweiten ringscheibenförmigen Erstreckungsabschnitt (14) aufweist, wobei der erste und zweite ringscheibenförmige Erstreckungsabschnitt über einen Verbindungsabschnitt (18) miteinander befestigt sind, **dadurch gekennzeichnet, dass** der Verbindungsabschnitt (18) elastisch ausgebildet ist, wobei an dem Rotationsbauteil (12) im Bereich des ersten ringscheibenförmigen Erstreckungsabschnitts (16) eine Zusatzmasse angeordnet ist, die als wenigstens eine Pendelmasse (28) eines Fliehkraftpendels (24) ausgeführt ist, wobei der erste ringscheibenförmige Erstreckungsabschnitt (16) den Pendelmassenträger bildet und wobei die Pendelmasse (28) entlang einer Pendellaufbahn begrenzt gegenüber dem Pendelmassenträger verschwenkbar ist.

2. Drehmomentübertragungseinrichtung nach Anspruch 1, **dadurch gekennzeichnet, dass** der Verbindungsabschnitt (18) eine axiale Beweglichkeit zwischen dem ersten und zweiten ringscheibenförmigen Erstreckungsabschnitt (14, 16) ermöglicht.

3. Drehmomentübertragungseinrichtung nach Anspruch 1 oder 2, **dadurch gekennzeichnet, dass** der Verbindungsabschnitt (18) biegeweich ausgebildet ist.

4. Drehmomentübertragungseinrichtung nach Anspruch 1 bis 3, **dadurch gekennzeichnet, dass** der erste und zweite ringscheibenförmige Erstreckungsabschnitt (14, 16) radial zueinander beabstandet ist.

5. Drehmomentübertragungseinrichtung nach Anspruch 1 bis 4, **dadurch gekennzeichnet, dass** das Rotationsbauteil (12) einteilig ausgebildet ist.

6. Drehmomentübertragungseinrichtung nach Anspruch 1 bis 5, **dadurch gekennzeichnet, dass** der Verbindungsabschnitt (18) als separates Verbindungselement (20) ausgeführt ist.

7. Drehmomentübertragungseinrichtung nach Anspruch 6, **dadurch gekennzeichnet, dass** das Verbindungselement (20) fest mit dem ersten und zweiten ringscheibenförmigen Erstreckungsabschnitt (14, 16) verbunden ist.

8. Drehmomentübertragungseinrichtung nach Anspruch 7, **dadurch gekennzeichnet, dass** das Verbindungselement (20) als Federblech und/oder als Tellerfeder und/oder als Blattfeder ausgebildet ist.

## Claims

1. Torque-transmitting device (10) in a drivetrain of a motor vehicle, which torque-transmitting device is formed as a torsional vibration damper (96) and is arranged in a hydrodynamic torque converter, having a rotary component (12) which is rotatable about an axis of rotation and which has a first annular-disc-shaped extent section (16) and, spaced apart axially therefrom, a second annular-disc-shaped extent section (14), wherein the first and second annular-disc-shaped extent sections are fastened to one another by means of a connecting section (18), **characterized in that** the connecting section (18) is of elastic form, wherein, on the rotary component (12), in the region of the first annular-disc-shaped extent section (16), there is arranged an additional mass which is formed as at least one pendulum mass (28) of a centrifugal pendulum (24), wherein the first annular-disc-shaped extent section (16) forms the pendulum mass carrier, and wherein the pendulum mass (28) is pivotable to a limited extent relative to the pendulum mass carrier along a pendulum path.

2. Torque-transmitting device according to Claim 1, **characterized in that** the connecting section (18) permits axial mobility between the first and second annular-disc-shaped extent sections (14, 16) .

3. Torque-transmitting device according to Claim 1 or 2, **characterized in that** the connecting section (18) is of flexible form.

4. Torque-transmitting device according to Claim 1 to 3, **characterized in that** the first and second annular-disc-shaped extent sections (14, 16) are radially spaced apart from one another.

5. Torque-transmitting device according to Claim 1 to 4, **characterized in that** the rotary component (12) is of unipartite form.

6. Torque-transmitting device according to Claim 1 to 5, **characterized in that** the connecting section (18) is formed as a separate connecting element (20) .

7. Torque-transmitting device according to Claim 6, **characterized in that** the connecting element (20) is fixedly connected to the first and second annular-disc-shaped extent sections (14, 16).

8. Torque-transmitting device according to Claim 7, **characterized in that** the connecting element (20) is formed as a spring sheet and/or as a plate spring and/or as a leaf spring.

## Revendications

1. Dispositif de transfert de couple (10) dans une chaîne cinématique d'un véhicule automobile, qui est réalisé sous forme d'amortisseur d'oscillations de torsion (96) et qui est disposé dans un convertisseur de couple hydrodynamique, comprenant un composant rotatif (12) pouvant tourner autour d'un axe de rotation, qui présente une première portion d'étendue (16) en forme de disque annulaire et une deuxième portion d'étendue (14) en forme de disque annulaire espacée axialement de celle-ci, la première et la deuxième portion d'étendue en forme de disque annulaire étant fixées l'une à l'autre par le biais d'une portion de liaison (18), **caractérisé en ce que** la portion de liaison (18) est réalisée sous forme élastique, une masse supplémentaire étant disposée au niveau du composant rotatif (12) dans la région de la première portion d'étendue (16) en forme de disque annulaire, laquelle est réalisée sous forme d'au moins une masse pendulaire (28) d'un pendule à force centrifuge (24), la première portion d'étendue (16) en forme de disque annulaire formant le support de masse pendulaire et la masse pendulaire (28) pouvant pivoter le long d'une trajectoire pendulaire de manière limitée par rapport au support de masse pendulaire.

2. Dispositif de transfert de couple selon la revendication 1, **caractérisé en ce que** la portion de liaison (18) permet une mobilité axiale entre la première et la deuxième portion d'étendue (14, 16) en forme de disque annulaire.

3. Dispositif de transfert de couple selon la revendication 1 ou 2, **caractérisé en ce que** la portion de liaison (18) est réalisé sous forme élastique souple.

4. Dispositif de transfert de couple selon les revendications 1 à 3, **caractérisé en ce que** la première et la deuxième portion d'étendue (14, 16) en forme de disque annulaire sont espacées radialement l'une de l'autre.

5. Dispositif de transfert de couple selon les revendications 1 à 4, **caractérisé en ce que** le composant rotatif (12) est réalisé d'une seule pièce.

6. Dispositif de transfert de couple selon les revendications 1 à 5, **caractérisé en ce que** la portion de liaison (18) est réalisée sous forme d'élément de liaison séparé (20).

7. Dispositif de transfert de couple selon la revendication 6, **caractérisé en ce que** l'élément de liaison (20) est connecté fixement à la première et à la deuxième portion d'étendue (14, 16) en forme de disque annulaire.

8. Dispositif de transfert de couple selon la revendication 7, **caractérisé en ce que** l'élément de liaison (20) est réalisé sous forme de tôle élastique et/ou sous forme de rondelle Belleville et/ou sous forme de ressort à lame.
